# EUROPEAN PATENT APPLICATION

(11) **EP 4 843 655 A1**
(43) Date of publication of application: **25.11.2026**
(21) Application number: 24918449.0
(22) Date of filing: 26.12.2024
(51) Int. Cl.: B01D 53/04, B01D 53/14, B01D 53/047, C01B 32/50

(54) **ATMOSPHERIC CARBON DIOXIDE SEPARATION/RECOVERY APPARATUS**

(30) Priority: 19.01.2024 JP 2024006612
(71) Applicant: Kawasaki Jukogyo Kabushiki Kaisha, Kobe-shi, Hyogo 650-8670 (JP)
(72) Inventor: MANABE, Satoshi, Hyogo 650-8670 (JP); NARIAI, Toshifumi, Hyogo 650-8670 (JP); OKUMURA, Takeshi, Hyogo 650-8670 (JP); NISHIBE, Shohei, Hyogo 650-8670 (JP); NUMAGUCHI, Ryohei, Hyogo 650-8670 (JP)
(74) Representative: Leinweber & Zimmermann
(86) International application number: PCT/JP2024/046282
(87) International publication number: WO 2025/154539

(57) **Abstract**

An atmospheric carbon dioxide separation and capture facility according to one aspect of the present disclosure includes: an adsorption tower that performs an adsorption treatment in which carbon dioxide contained in atmospheric air is adsorbed onto particulate adsorbent accommodated in the adsorption tower by bringing the atmospheric air into contact with the adsorbent; and a regeneration tower that performs a regeneration treatment in which the carbon dioxide is desorbed from the adsorbent by bringing low-temperature steam into contact with the adsorbent in a state where pressure inside the regeneration tower is set to negative pressure. The adsorption tower receives the adsorbent subjected to the regeneration treatment in the regeneration tower, and performs the adsorption treatment using the received adsorbent. The regeneration tower receives the adsorbent used for the adsorption treatment in the adsorption tower, and performs the regeneration treatment with respect to the received adsorbent.

## Description

### Technical Field

The present disclosure relates to an atmospheric carbon dioxide separation and capture facility that separates and captures carbon dioxide from atmospheric air.

### Background Art

PTL 1 below discloses a technology in which carbon dioxide in air is adsorbed onto particulate adsorbent, and then, the carbon dioxide is separated from the adsorbent using steam, which is a form of process heat, to regenerate the adsorbent.

### Citation List

### Patent Literature

PTL 1: Japanese Laid-Open Patent Application Publication No. 2022-20723

### Summary of Invention

### Technical Problem

In an atmospheric carbon dioxide separation and capture facility, adsorbent can be efficiently regenerated by using high-temperature steam in a regeneration treatment for the adsorbent. However, generating the high-temperature steam requires a significant amount of energy. If carbon dioxide is discharged in order to obtain such energy, the original purpose would be defeated. Moreover, for example, even if the high-temperature steam can be generated using waste heat from a certain facility, such high-temperature steam has high utility and may also be required by other facilities. An object of the present disclosure is to provide an atmospheric carbon dioxide separation and capture facility capable of performing a regeneration treatment for adsorbent using low-temperature steam.

### Solution to Problem

An atmospheric carbon dioxide separation and capture facility according to one aspect of the present disclosure includes: an adsorption tower that performs an adsorption treatment in which carbon dioxide contained in atmospheric air is adsorbed onto particulate adsorbent accommodated in the adsorption tower by bringing the atmospheric air into contact with the adsorbent; and a regeneration tower that performs a regeneration treatment in which the carbon dioxide is desorbed from the adsorbent by bringing low-temperature steam into contact with the adsorbent in a state where pressure inside the regeneration tower is set to negative pressure. The adsorption tower receives the adsorbent subjected to the regeneration treatment in the regeneration tower, and performs the adsorption treatment using the received adsorbent. The regeneration tower receives the adsorbent used for the adsorption treatment in the adsorption tower, and performs the regeneration treatment with respect to the received adsorbent.

### Advantageous Effects of Invention

This configuration can provide the atmospheric carbon dioxide separation and capture facility capable of performing the regeneration treatment for the adsorbent using low-temperature steam.

### Brief Description of Drawings

FIG. 1 is a conceptual diagram of an atmospheric carbon dioxide separation and capture facility.
FIG. 2 is a diagram of an adsorption tower as viewed from an inflow surface side.
FIG. 3 is a diagram of the adsorption tower as viewed from an outflow surface side.

### Description of Embodiments

### Entire Configuration

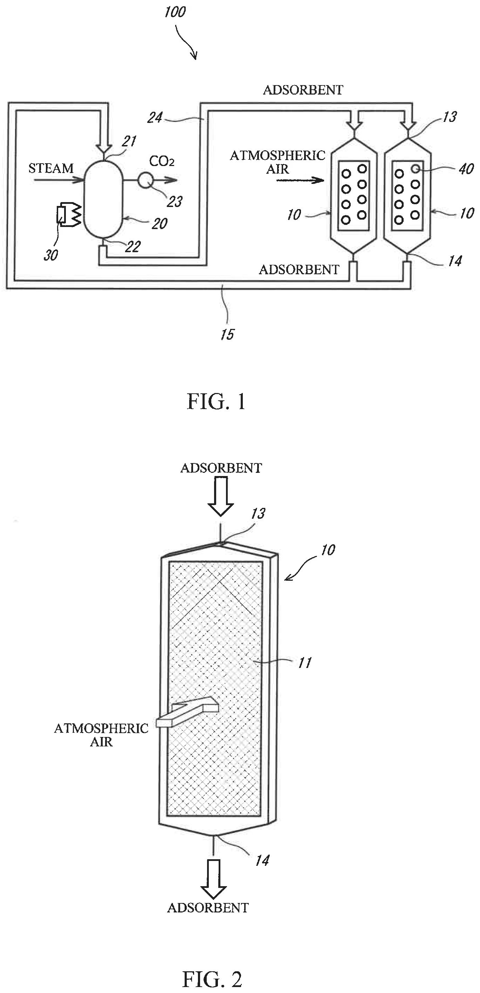

Hereinafter, an embodiment will be described. First, the entire configuration of an atmospheric carbon dioxide separation and capture facility (hereinafter referred to as a "separation and capture facility") 100 according to the embodiment will be described. FIG. 1 is a conceptual diagram of the separation and capture facility 100. The separation and capture facility 100 is a facility that separates and captures carbon dioxide from atmospheric air. To be specific, the separation and capture facility 100 is a Direct Air Capture (DAC) facility.

As shown in FIG. 1, the separation and capture facility 100 includes adsorption towers 10, a regeneration tower 20, a temperature adjuster 30, and suction structures 40. Hereinafter, these components will be described in order.

### Adsorption Tower

Each of the adsorption towers 10 is a chamber in which an adsorption treatment for causing adsorbent to adsorb carbon dioxide in atmospheric air is performed. FIG. 1 shows the two adsorption towers 10. However, the number of adsorption towers 10 included in the separation and capture facility 100 is not limited. The adsorbent to be used for the adsorption treatment is the adsorbent subjected to a regeneration treatment in the below-described regeneration tower 20. Each of the adsorption towers 10 receives the adsorbent subjected to the regeneration treatment in the regeneration tower 20, and performs the adsorption treatment using the received adsorbent. The atmospheric air comes into contact with the adsorbent by passing through the inside of the adsorption tower 10 accommodating the adsorbent. Thus, carbon dioxide in the atmospheric air is adsorbed onto the adsorbent and captured.

The adsorbent of the present embodiment is particulate adsorbent and obtained by impregnating a porous carrier with an amine. However, the adsorbent is not limited to this. The adsorbent has a characteristic that the amount of carbon dioxide that can be adsorbed increases as the temperature decreases and as the surrounding pressure increases. Therefore, the carbon dioxide adsorbed onto the adsorbent is desorbed from the adsorbent as the temperature of the adsorbent is increased, and is also desorbed from the adsorbent as the surrounding pressure is decreased.

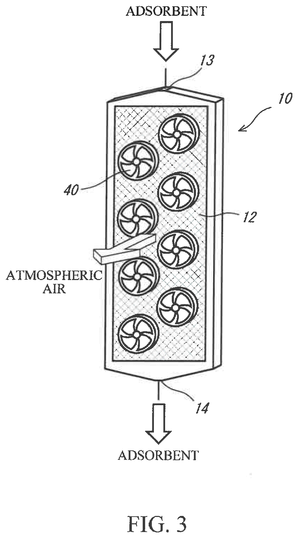

The adsorption tower 10 has a plate shape and extends in a vertical direction. The adsorption tower 10 includes: an inflow surface 11 that is one of main surfaces; and an outflow surface 12 that is the other main surface. FIG. 2 is a diagram of the adsorption tower 10 as viewed from the inflow surface 11 side, and FIG. 3 is a diagram of the adsorption tower 10 as viewed from the outflow surface 12 side. The inflow surface 11 and the outflow surface 12 are, for example, mesh members. As shown in FIG. 2, the atmospheric air flows from the outside of the adsorption tower 10 through the inflow surface 11 to the inside of the adsorption tower 10. Moreover, as shown in FIG. 3, the atmospheric air that has flown to the inside of the adsorption tower 10 passes through gaps of the adsorbent and flows to the outside of the adsorption tower 10 through the outflow surface 12.

The adsorption tower 10 includes: a supply port 13 which receives the adsorbent; and a discharge port 14 from which the adsorbent used is discharged. In the present embodiment, the supply port 13 is located at an upper end portion of the adsorption tower 10, and the discharge port 14 is located at a lower end portion of the adsorption tower 10. As shown in FIG. 1, the adsorbent discharged from the adsorption towers 10 is transported and supplied to the regeneration tower 20 by a transporter 15. The transporter 15 is, for example, a bucket conveyor, a pneumatic conveyor, or the like. However, when the regeneration tower 20 is located below the adsorption towers 10, the adsorbent may be supplied from the adsorption towers 10 to the regeneration tower 20 by utilizing the own weight of the adsorbent.

### Regeneration Tower

The regeneration tower 20 is a chamber in which the regeneration treatment for desorbing carbon dioxide from the adsorbent is performed. The adsorbent to be subjected to the regeneration treatment is the adsorbent that has been used for the adsorption treatment in the adsorption tower 10. The regeneration tower 20 receives the adsorbent that has been used for the adsorption treatment in the adsorption tower 10, and performs the regeneration treatment by bringing steam into contact with the received adsorbent. The regeneration tower 20 of the present embodiment is a sealable container. The regeneration tower 20 includes: a supply port 21 which receives the adsorbent used for the adsorption treatment; and a discharge port 22 from which the adsorbent subjected to the regeneration treatment is discharged. In the present embodiment, the supply port 21 is located at an upper end portion of the regeneration tower 20, and the discharge port 22 is located at a lower end portion of the regeneration tower 20.

The carbon dioxide desorbed from the adsorbent by the regeneration treatment is discharged to, for example, a carbon dioxide holder (not shown) by a discharge pump 23. The regeneration tower 20 may be located below, above, or at the same height as the adsorption tower 10.

As a method of performing the regeneration treatment, there is a method of increasing the temperature of the adsorbent. In this method, indirect heating is generally performed, in which the adsorbent is heated by applying heat to a wall surface of a tower accommodating the adsorbent. However, in such indirect heating, it is difficult for the heat to reach the adsorbent located near the center of the tower. In addition, when the adsorbent is in a particulate form, the heat is transferred to respective adsorbent particles through contact points between adjacent adsorbent particles, and this deteriorates heat transfer efficiency. On the other hand, in the present embodiment, since the regeneration treatment is performed using steam, the steam enters gaps of the adsorbent and can directly heat the particulate adsorbent. Therefore, the heat utilization efficiency of this direct heating is higher than that of the indirect heating. However, in order to perform the regeneration treatment solely by heating, high-temperature steam at about 100°C is required. Generating such high-temperature steam requires a significant amount of energy. Moreover, even if the high-temperature steam can be generated using waste heat from a certain facility, such high-temperature steam has high utility as a heat source, and therefore, is also required by other facilities, such as a power generation facility.

Thus, in the present embodiment, as the method of performing the regeneration treatment, in addition to the method of increasing the temperature of the adsorbent using steam, a method of reducing the surrounding pressure of the adsorbent is also performed, thereby suppressing the temperature of the steam used. Specifically, the adsorbent supplied from the adsorption tower 10 is received in the regeneration tower 20, and in a state where pressure inside the regeneration tower 20 is set to negative pressure, low-temperature steam is brought into contact with the received adsorbent. In order to set the pressure inside the regeneration tower 20 to the negative pressure, the discharge pump 23 that discharges carbon dioxide from the regeneration tower 20 can be utilized, for example. The "low-temperature steam" is, for example, steam at 100°C or lower.

In the present embodiment, the pressure inside the regeneration tower 20 is set to the negative pressure. Therefore, even when the steam used for the regeneration treatment is low in temperature, carbon dioxide can be adequately desorbed from the adsorbent. Then, by using the low-temperature steam for the regeneration treatment, energy required for the generation of the steam can be reduced in a case where the steam is generated. Moreover, in a case where unutilized low-temperature steam is available, such low-temperature steam can be utilized. Therefore, the energy consumption of the separation and capture facility 100 as a whole can be suppressed.

Moreover, by using the low-temperature steam for the regeneration treatment, a secondary effect of suppressing the deterioration of the adsorbent can be expected. In the adsorbent supporting an amine, the carbon dioxide adsorption capacity decreases due to degradations of the amine, such as volatilization, thermal degradation, and oxidative degradation. However, the lower the temperature of the steam used, the more these degradations are suppressed. Therefore, according to the present embodiment, the replacement frequency of the adsorbent is reduced compared to a case where a general regeneration treatment using a high-temperature heat source is performed.

The adsorbent subjected to the regeneration treatment is discharged from the discharge port 22 of the regeneration tower 20. The adsorbent discharged from the regeneration tower 20 is transported and supplied to the adsorption tower 10 by a transporter 24. The transporter 24 is, for example, a bucket conveyor, a pneumatic conveyor, or the like. However, when the adsorption towers 10 are located below the regeneration tower 20, the adsorbent may be supplied from the regeneration tower 20 to the adsorption towers 10 by utilizing the own weight of the adsorbent.

Moreover, unlike the present embodiment, in a facility in which the adsorption treatment and the regeneration treatment are performed in the same tower, atmospheric air passes through the inside of the tower during the execution of the adsorption treatment and cools the tower. Therefore, when the regeneration treatment is performed thereafter, the cooled tower needs to be reheated with steam or a heating device. However, according to the present embodiment, since the towers are separated, the above reheating is unnecessary, and this can suppress the energy consumption.

### Temperature Adjuster

The temperature adjuster 30 is a device that keeps the regeneration tower 20 warm or heats the regeneration tower 20. The temperature adjuster 30 of the present embodiment heats the regeneration tower 20 during the execution of the regeneration treatment such that an internal temperature of the regeneration tower 20 becomes a specified value or more. Herein, the specified value is, for example, 50°C to 100°C. Thus, carbon dioxide can be adequately desorbed from the adsorbent while further suppressing the energy of the steam used.

### Suction Structures

The suction structures 40 are devices that suck the atmospheric air from the inside of the adsorption tower 10. As shown in FIG. 3, the suction structures 40 are located outside the adsorption tower 10 and close to the outflow surface 12. The suction structures 40 of the present embodiment are, for example, fans. However, the suction structures 40 are not limited to these. For example, the suction structure 40 may be a pipe that is connected to a negative-pressure tank or a negative-pressure chimney. Instead of the suction structures 40, the separation and capture facility 100 may include an air blower, such as a fan, which supplies the atmospheric air to the inflow surface 11 of the adsorption tower 10.

The suction structures 40 suck the atmospheric air from the inside of the adsorption tower 10 through the outflow surface 12 of the adsorption tower 10, and therefore, the atmospheric air flows to the inside of the adsorption tower 10 from the outside of the adsorption tower 10 through the inflow surface 11. As above, in the present embodiment, instead of using the air blower that supplies the atmospheric air toward the inflow surface 11 of the adsorption tower 10, the suction structures 40 are used to cause the atmospheric air to flow to the inside of the adsorption tower 10.

Therefore, according to the present embodiment, the atmospheric air flowing into the adsorption tower 10 can be prevented from increasing in temperature due to passing through the air blower. As described above, the adsorbent adsorbs carbon dioxide more readily at low temperatures. In the present embodiment, since the atmospheric air that is relatively low in temperature flows into the adsorption tower 10, the temperature rise of the adsorbent due to the atmospheric air is suppressed, and the adsorption treatment can be efficiently performed.

### Operations of Separation and Capture Facility

Next, operations of the separation and capture facility 100 will be described. Herein, for ease of explanation, the separation and capture facility 100 includes two adsorption towers 10 and one regeneration tower 20. Moreover, the volume of each adsorption tower 10 is equal to the volume of the regeneration tower 20. Furthermore, an adsorption treatment time is twice a regeneration treatment time. Specifically, the adsorption treatment time is two hours, and the regeneration treatment time is one hour. Herein, the "adsorption treatment time" denotes a time during which the adsorption treatment is performed using the adsorbent from when the adsorption tower 10 receives the adsorbent until the adsorption tower 10 discharges the adsorbent. Moreover, the "regeneration treatment time" denotes a time during which the regeneration treatment is performed with respect to the adsorbent from when the regeneration tower 20 receives the adsorbent until the regeneration tower 20 discharges the adsorbent.

First, the separation and capture facility 100 simultaneously performs the adsorption treatment and the regeneration treatment. The adsorption treatment is performed in each of the two adsorption towers 10. Specifically, in a state where both of the adsorption towers 10 store the adsorbent, the suction structures 40 corresponding to these adsorption towers 10 are driven. Thus, the atmospheric air flows into both of the adsorption towers 10 and passes through the insides of the adsorption towers 10, and carbon dioxide in the atmospheric air is adsorbed onto and captured by the adsorbent.

On the other hand, in the regeneration treatment, the adsorbent used for the adsorption treatment is accommodated in the regeneration tower 20, and the regeneration tower 20 is sealed. Then, in a state where pressure inside the regeneration tower 20 is set to negative pressure, low-temperature steam is supplied to the regeneration tower 20. Thus, carbon dioxide is desorbed from the adsorbent, and this regenerates the adsorbent. At this time, the temperature inside the regeneration tower 20 is maintained at the specified value or more in such a manner that the temperature adjuster 30 keeps the regeneration tower 20 warm or heats the regeneration tower 20.

Next, when the regeneration treatment is completed after being performed for one hour, the suction structures 40 corresponding to one of the two adsorption towers 10 are stopped, and the adsorption treatment in this adsorption tower 10 is completed. At this time, the adsorption treatment in the other of the two adsorption towers 10 continues.

The adsorption tower 10 in which the adsorption treatment has been completed discharges all of the adsorbent used for the adsorption treatment and supplies the adsorbent to the regeneration tower 20. Simultaneously with this, the regeneration tower 20 discharges all of the adsorbent subjected to the regeneration treatment, and supplies the adsorbent to the adsorption tower 10 in which the adsorption treatment has been completed. To be specific, the adsorbent is exchanged between the regeneration tower 20 and the adsorption tower 10 in which the adsorption treatment has been completed.

Next, the regeneration treatment is resumed in the regeneration tower 20, and the adsorption treatment is resumed in the adsorption tower 10 in which the adsorbent has been exchanged. Thereafter, when the regeneration treatment is completed after being performed for one hour, the adsorbent is exchanged between the regeneration tower 20 and the adsorption tower 10 different from the adsorption tower 10 in which the adsorbent was previously exchanged. After the adsorbent is exchanged, the regeneration treatment is resumed in the regeneration tower 20, and the adsorption treatment is resumed in the adsorption tower 10 in which the adsorbent has been exchanged.

As above, by alternately performing the exchange of the adsorbent for the two adsorption towers 10 every hour, the adsorbent in the regeneration tower 20 is exchanged every hour, and the adsorbent in each adsorption tower 10 is exchanged every two hours. By repeating the above cycle, the adsorption treatment and the regeneration treatment can be continuously performed even when the adsorption treatment time (two hours in the above example) and the regeneration treatment time (an hour in the above example) are different.

The foregoing has described the operations of the separation and capture facility 100. However, the operations of the separation and capture facility 100 are not limited to the above. For example, although all of the adsorbent in the adsorption tower 10 is exchanged at once in the above description, the adsorbent in the adsorption tower 10 may be exchanged in multiple steps. Moreover, the adsorbent discharged from the regeneration tower 20 may be accommodated in a container (not shown) once, and the adsorbent may be supplied from the container to the adsorption tower 10.

Moreover, in the above description, the adsorption treatment time is twice the regeneration treatment time. However, the adsorption treatment time may be twice or more the regeneration treatment time. The separation and capture facility 100 according to the present embodiment causes the adsorbent to adsorb carbon dioxide from atmospheric air. However, the amount of carbon dioxide contained in atmospheric air is significantly smaller than the amount of carbon dioxide contained in exhaust gas. Therefore, the adsorbent can sufficiently adsorb carbon dioxide even when exposed to the atmospheric air for a long period of time. Thus, by ensuring a long adsorption treatment time as in the present embodiment, the performance of the adsorbent can be fully utilized, and this enables the efficient adsorption treatment.

Moreover, as described above, the separation and capture facility 100 according to the present embodiment supplies the adsorbent regenerated in the regeneration tower 20 directly to the adsorption tower 10. To be specific, the adsorbent that has contacted the steam in the regeneration tower 20 is supplied to the adsorption tower 10 in a wet state. In the separation and capture facility 100 according to the present embodiment, since the adsorption treatment time is long as described above, the adsorbent accommodated in the adsorption tower 10 is exposed to the flowing atmospheric air for a long period of time. Therefore, in the adsorption tower 10, a drying treatment of drying the adsorbent using the atmospheric air can be performed. Thus, according to the present embodiment, the drying treatment is performed simultaneously with the adsorption treatment in the adsorption tower 10. Therefore, a drying tower can be omitted. Thus, the configuration of the separation and capture facility 100 can be simplified, and the energy consumption of the separation and capture facility 100 can be suppressed.

### Conclusion

A first aspect disclosed in the present specification is an atmospheric carbon dioxide separation and capture facility including: an adsorption tower that performs an adsorption treatment in which carbon dioxide contained in atmospheric air is adsorbed onto particulate adsorbent accommodated in the adsorption tower by bringing the atmospheric air into contact with the adsorbent; and a regeneration tower that performs a regeneration treatment in which the carbon dioxide is desorbed from the adsorbent by bringing low-temperature steam into contact with the adsorbent in a state where pressure inside the regeneration tower is set to negative pressure, wherein: the adsorption tower receives the adsorbent subjected to the regeneration treatment in the regeneration tower, and performs the adsorption treatment using the received adsorbent; and the regeneration tower receives the adsorbent used for the adsorption treatment in the adsorption tower, and performs the regeneration treatment with respect to the received adsorbent.

According to this configuration, even when the steam used is low in temperature, carbon dioxide can be adequately desorbed from the adsorbent. Then, by using the low-temperature steam for the regeneration treatment, energy required for the generation of the steam used for the regeneration treatment can be reduced in a case where the steam is generated. Moreover, in a case where unutilized low-temperature steam is available, such low-temperature steam can be utilized. Therefore, the energy consumption of the atmospheric carbon dioxide separation and capture facility as a whole can be suppressed.

A second aspect disclosed in the present specification is the atmospheric carbon dioxide separation and capture facility according to the first aspect, wherein: the adsorption tower receives the adsorbent that has contacted the steam in the regeneration tower and is in a wet state; and the adsorption tower performs a drying treatment in which the received adsorbent is dried simultaneously with execution of the adsorption treatment by bringing the atmospheric air into contact with the received adsorbent.

According to this configuration, there is no need to provide, separately from the adsorption tower, a drying tower in which the drying treatment is performed. Therefore, the configuration of the atmospheric carbon dioxide separation and capture facility can be simplified, and the energy consumption of the atmospheric carbon dioxide separation and capture facility can be suppressed.

A third aspect disclosed in the present specification is the atmospheric carbon dioxide separation and capture facility according to the first aspect, wherein an adsorption treatment time during which the adsorption treatment is performed using the adsorbent from when the adsorption tower receives the adsorbent until the adsorption tower discharges the adsorbent is twice or more a regeneration treatment time during which the regeneration treatment is performed with respect to the adsorbent from when the regeneration tower receives the adsorbent until the regeneration tower discharges the adsorbent.

According to this configuration, the efficient adsorption treatment can be performed by ensuring a long adsorption treatment time.

A fourth aspect disclosed in the present specification is the atmospheric carbon dioxide separation and capture facility according to any one of the first to third aspects, including a temperature adjuster that keeps the regeneration tower warm or heats the regeneration tower during execution of the regeneration treatment in the regeneration tower such that an internal temperature of the regeneration tower becomes a specified value or more.

According to this configuration, carbon dioxide can be adequately desorbed from the adsorbent while further suppressing the temperature of the steam used.

A fifth aspect disclosed in the present specification is the atmospheric carbon dioxide separation and capture facility according to any one of the first to fourth aspects, wherein: the adsorption tower includes an inflow surface through which the atmospheric air flows from an outside of the adsorption tower to an inside of the adsorption tower and an outflow surface through which the atmospheric air flows from the inside of the adsorption tower to the outside of the adsorption tower; and the atmospheric carbon dioxide separation and capture facility includes a suction structure that is located outside the adsorption tower and sucks the atmospheric air from the inside of the adsorption tower through the outflow surface to cause the atmospheric air to flow from the outside of the adsorption tower through the inflow surface to the inside of the adsorption tower.

According to this configuration, since the temperature of the atmospheric air flowing into the adsorption tower can be suppressed, the temperature rise of the adsorbent can be suppressed, and therefore, the adsorption treatment can be efficiently performed.

## Claims

1. An atmospheric carbon dioxide separation and capture facility comprising:
an adsorption tower that performs an adsorption treatment in which carbon dioxide contained in atmospheric air is adsorbed onto particulate adsorbent accommodated in the adsorption tower by bringing the atmospheric air into contact with the adsorbent; and
a regeneration tower that performs a regeneration treatment in which the carbon dioxide is desorbed from the adsorbent by bringing low-temperature steam into contact with the adsorbent in a state where pressure inside the regeneration tower is set to negative pressure, wherein:
the adsorption tower receives the adsorbent subjected to the regeneration treatment in the regeneration tower, and performs the adsorption treatment using the received adsorbent; and
the regeneration tower receives the adsorbent used for the adsorption treatment in the adsorption tower, and performs the regeneration treatment with respect to the received adsorbent.

2. The atmospheric carbon dioxide separation and capture facility according to claim 1, wherein:
the adsorption tower receives the adsorbent that has contacted the steam in the regeneration tower and is in a wet state; and
the adsorption tower performs a drying treatment in which the received adsorbent is dried simultaneously with execution of the adsorption treatment by bringing the atmospheric air into contact with the received adsorbent.

3. The atmospheric carbon dioxide separation and capture facility according to claim 1, wherein an adsorption treatment time during which the adsorption treatment is performed using the adsorbent from when the adsorption tower receives the adsorbent until the adsorption tower discharges the adsorbent is twice or more a regeneration treatment time during which the regeneration treatment is performed with respect to the adsorbent from when the regeneration tower receives the adsorbent until the regeneration tower discharges the adsorbent.

4. The atmospheric carbon dioxide separation and capture facility according to claim 1, comprising a temperature adjuster that keeps the regeneration tower warm or heats the regeneration tower during execution of the regeneration treatment in the regeneration tower such that an internal temperature of the regeneration tower becomes a specified value or more.

5. The atmospheric carbon dioxide separation and capture facility according to claim 1, wherein:
the adsorption tower includes
an inflow surface through which the atmospheric air flows from an outside of the adsorption tower to an inside of the adsorption tower and
an outflow surface through which the atmospheric air flows from the inside of the adsorption tower to the outside of the adsorption tower; and
the atmospheric carbon dioxide separation and capture facility includes a suction structure that is located outside the adsorption tower and sucks the atmospheric air from the inside of the adsorption tower through the outflow surface to cause the atmospheric air to flow from the outside of the adsorption tower through the inflow surface to the inside of the adsorption tower.
